# EUROPEAN PATENT APPLICATION

(11) **EP 4 835 732 A1**
(43) Date of publication of application: **04.11.2026**
(21) Application number: 25192717.4
(22) Date of filing: 30.07.2025
(51) Int. Cl.: G06K 7/10, H01Q 1/22, H01Q 3/24

(54) **ANTENNA HOUSING AND ELECTRONIC DEVICE COMPRISING THE SAME**

(30) Priority: 28.04.2025 TW 114115999
(71) Applicant: Flytech Technology Co., Ltd., Taipei City 11494 (TW)
(72) Inventor: CHOU, Li-Chun, 11494 Taipei City (TW); FENG, Tien-Hsien, 11494 Taipei City (TW)
(74) Representative: Boult Wade Tennant LLP

(57) **Abstract**

The present invention relates to an electronic device. The electronic device includes: an antenna housing configured to include a plastic portion and to define a viewing window; a display module including a display area, wherein a portion of the display module is configured within the antenna housing and the display area is exposed through the viewing window; and a plurality of antenna elements, each of which is independently enableable and configured to be integrated to a surface or an interior of the plastic portion.

## Description

### CROSS-REFERENCE TO RELATED APPLICATION

This application claims priority benefit to Taiwan Invention Patent Application Serial No. 114115999, filed on April 28, 2025, in Taiwan Intellectual Property Office, the entire disclosures of which are incorporated by reference herein.

### FIELD

The present invention relates to an antenna housing and an electronic device comprising the same, in particular to an antenna housing and an electronic device comprising the same, in which various antenna elements are integrated or bonded into the plastic portion of the antenna housing on the electronic device, and an intelligent control module is configured to intelligently and individually control the respective antenna elements to perform near-field wireless communication.

### BACKGROUND

With the widespread of wireless communication technology, particularly NFC and RFID technologies have been extensively applied in various electronic devices to achieve functions such as quick data exchange, identity recognition, mobile payment, access control management, warehousing and logistics, interactive advertising, self-service equipment, etc. The demands for integrating NFC/RFID reading functions into electronic devices are increasingly growing.

The NFC and RFID technologies are primarily based on the principle of magnetic sensing or inductive magnetic coupling. Common technical specifications include Near Field Communication (NFC), High Frequency/Low Frequency Radio Frequency Identification (HF/LF RFID), and Magnetic Secure Transmission (MST), etc. In order to realize near-field wireless communication functions, existing electronic devices, such as POS terminals, SST, SCO machines, or general devices equipped with display screens, are all configured with necessary antenna elements.

In the state of the art, the antenna elements, such as NFC antennas, RFID antennas, etc., are usually configured in the form of independent coil antennas or printed circuit board antennas. These independent antenna modules require additional space for installation and usually need to be connected to a main circuit board via a flexible printed circuit or other connection methods. In general, these antenna elements are made independently as a separate plug-in NFC/RFID modules that are electrically attached and connected to the electronic device in the form of add-on modules.

However, such conventional way to configure antenna has multiple deficiencies. Firstly, the add-on antenna modules significantly increase the overall space requirement of the electronic device. Secondly, such modules require dedicated fixing structures and connection lines, which not only increases design complexity but also raises manufacturing costs. In addition, since these antennas are usually installed at specific positions, such as the side wall of the device or at a position relatively far from the display area, consumers have to look for a sensing point to operate on purpose, which significantly reduces the convenience of use and the intuitiveness of operation.

Furthermore, antenna elements in conventional technology usually only provide a single fixed sensing area, which limits the flexibility and coverage of sensing. When an operating position slightly deviates from a default sensing area, it may lead to sensing failure, thereby affecting the overall user experience. It can neither adapt to the usage habits and operating postures of different users nor effectively meet the needs of multiple application scenarios. In addition, it usually lacks intuitive visual guidance for conventional sensing points, and users have to search multiple times, inquire, and reconfirm the exact position of the sensing point, causing operational delays and inconvenience.

Antenna elements in existing technology also generally lack intelligent control mechanisms, which are unable to dynamically adjust working modes or select optimal antenna combinations according to actual usage scenarios. It leads to poor energy utilization efficiency and can hardly maintain stable sensing performance in complex environments. In some application scenarios requiring high reliability, such as self-checkout or security access control systems, the above deficiencies may cause service interruptions or lead to security issues.

On the other hand, in light of the increasing emphasis on aesthetics and integrated design in modern electronic devices, external antenna modules often disrupt the overall design coherence and visual harmony of the device. Furthermore, add-on modules exposed to the external environment are more vulnerable to adverse effects from physical collisions, friction, or other environmental factors, which greatly reduces the service life and stability of the modules.

Hence, there is a need to solve the above deficiencies/issues.

### SUMMARY

The present invention relates to an antenna housing and an electronic device comprising the same, in particular to an antenna housing and an electronic device comprising the same, in which various antenna elements are integrated or bonded into the plastic portion of the antenna housing on the electronic device, and an intelligent control module is configured to intelligently and individually control the respective antenna elements to perform near-field wireless communication.

Accordingly, the present invention provides an electronic device. The electronic device includes: an antenna housing configured to include a plastic portion and to define a viewing window; a display module including a display area, wherein a portion of the display module is configured within the antenna housing and the display area is exposed through the viewing window; and a plurality of antenna elements, each of which is independently enableable and configured to be integrated to a surface or an interior of the plastic portion.

The present invention further provides an antenna housing. The antenna housing is configured in an electronic device and includes the electronic device, including: a housing configured to include a plastic portion and to define a viewing window; a display module including a display area, wherein a portion of the display module is configured within the antenna housing and the display area is exposed through the viewing window; and a plurality of antenna elements, each of which is independently enableable and configured to be integrated to a surface or an interior of the plastic portion.

The above content described in the summary is intended to provide a simplified summary for the presently disclosed invention, so that readers are able to have an initial and basic understanding to the presently disclosed invention. The above content is not aimed to reveal or disclose a comprehensive and detailed description for the present invention, and is never intended to indicate essential elements in various embodiments in the present invention, or define the scope or coverage in the present invention.

### DESCRIPTION OF THE DRAWINGS

A more complete appreciation according to the present invention and many of the attendant advantages thereof are readily obtained as the same become better understood by reference to the following detailed description when considered in connection with the accompanying drawing, wherein:
FIG. 1 is a schematic diagram illustrating a front view of the electronic device included in the present invention;
FIG. 2 is a schematic diagram illustrating a side view of the electronic device included in the present invention;
FIG. 3 is a schematic diagram illustrating a perspective view of the electronic device included in the present invention;
FIG. 4 is a schematic diagram illustrating a surface-integrated antenna housing included in the present invention;
FIG. 5 is a schematic diagram illustrating an interior-integrated antenna housing included in the present invention;
FIG. 6 is a schematic diagram illustrating a first perspective view for the first embodiment included in the present invention;
FIG. 7 is a schematic diagram illustrating a second perspective view for the first embodiment included in the present invention;
FIG. 8 is a schematic diagram illustrating a rear perspective view for the first embodiment included in the present invention;
FIG. 9 is a schematic diagram illustrating a front top perspective view for the second embodiment included in the present invention;
FIG. 10 is a schematic diagram illustrating a rear top perspective view for the second embodiment included in the present invention;
FIG. 11 is a schematic diagram illustrating a front view for the third embodiment included in the present invention;
FIG. 12 is a block diagram illustrating multiple logic included in the control module and its firmware included in the present invention;
FIG. 13 is a schematic diagram illustrating an operation of a position indication mode included in the indicating information control logic included in the present invention; and
FIG. 14 is a schematic diagram illustrating an operation of a random indication mode included in the indicating information control logic included in the present invention.

### DETAILED DESCRIPTION

The present disclosure will be described with respect to particular embodiments and with reference to certain drawings, but the disclosure is not limited thereto but is only limited by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice. It is clear that other embodiments can be configured according to the knowledge of persons skilled in the art without departing from the true technical teaching of the present disclosure, the claimed disclosure being limited only by the terms of the appended claims.

It is to be noticed that the term "including," used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device including means A and B" should not be limited to devices consisting only of components A and B.

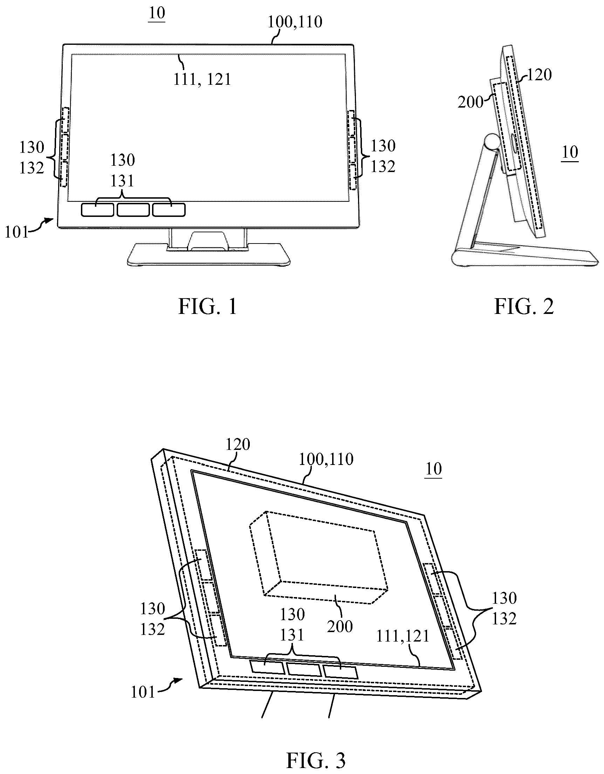

FIG. 1 is a schematic diagram illustrating a front view of the electronic device included in the present invention; FIG. 2 is a schematic diagram illustrating a side view of the electronic device included in the present invention; FIG. 3 is a schematic diagram illustrating a perspective view of the electronic device included in the present invention. The electronic device 10 included in the present invention is preferably, for example but not limited to, a kiosk, a POS (point-of-sale) terminal, a POS (point-of-service) terminal, an SST (self-service terminal), an SCO (self-checkout) terminal, an electronic access control terminal, an interactive advertising terminal, a cashier terminal, or any other equipment requiring the use of near-field wireless sensing communication technology, such as a tablet computer, an industrial computer, a display, etc.

The electronic device 10 includes a housing 100, a display module 120, a plurality of antenna elements 130, and a control module 200. The electronic device 10 further includes other electronic components, such as a processing unit, a memory, a power module, a communication interface, and I/O units, etc., which are integrated into the control module 200 or configured as independent units. The control module 200 is preferably integrated into an existing main circuit board or other circuit modules of the electronic device 10, or is alternatively designed and made as an independent module and disposed at any appropriate position within the internal space of the housing 100.

The housing 100 is configured to function as an external framework or outer casing for the electronic device 10. The housing 100 includes a plastic portion 110. All or a part of the housing 100, such as a front cover, a rear cover, side walls, a bezel, etc., is preferably made of plastic material and forms the plastic portion 110. Preferably, the plastic portion 110 of the housing 100 is configured to define or form a viewing window 111 for exposing a display area 121 included in the display module 120.

The display module 120 is preferably, for example but not limited to, an LCD (liquid crystal display) or an OLED (organic light-emitting diode) display, and has a display area 121 for displaying digital content such as images, text, graphical interfaces, etc., to a user. The display module 120 is configured to selectively include a touch panel configured above the display area 121 to detect a touch input from the user. The display module 120 is configured within the electronic device 10 through the housing 100. The display area 121 included in the display module 120 is positioned to align with the viewing window 111 of the housing 100 and is exposed through the viewing window 111 for the user to view information or perform interactive operations.

The antenna elements 130 are preferably antennas designed based on the principle of magnetic sensing or inductive magnetic coupling, and are preferably applied to near-field wireless communication, in particular near-field wireless sensing communication based on electromagnetic field interaction.

The antenna elements 130 are preferably configured in an initiator device to transmit (Tx) or receive (Rx) wireless radio frequency signals, and to generate and sense electromagnetic fields, including but not limited to: transmitting inquiry signals to a target device, including but not limited to an NFC card or an RFID tag, or receiving response signals from the target device.

The antenna elements 130 include, but are not limited to, the following types: an NFC antenna, an HF RFID antenna, an LF RFID antenna, an MST antenna, or a combination thereof, wherein the NFC antenna preferably operates at an operating frequency of 13.56 MHz, the HF RFID antenna preferably also operates at an operating frequency of 13.56 MHz, the LF RFID antenna preferably supports low-frequency operation at 125 kHz or 134.2 kHz, and the MST antenna is dedicated to magnetic secure transmission.

Depending on different requirements or structural layouts, the respective antenna elements 130 may preferably have the same structure or adopt a differentiated configuration. The differentiated configuration includes but is not limited to: adopting different coil patterns, such as adopting loop-type or dipole-type coils; adopting different physical sizes; adopting different resonant frequencies; or adopting different topological structures.

Each of the antenna elements 130 can be independently enabled or independently disabled, that is, the control module 200 can adopt an independent control manner to individually control the enabling or disabling of any single antenna of the antenna elements 130, but can also adopt a combined control manner to selectively and simultaneously control the enabling or disabling of multiple antennas of antenna elements 130, so as to enhance signal coverage scope or perform multiple read tasks.

In one embodiment, each of the antenna elements 130 is configured to be directly integrated to the plastic portion 110 of the housing 100, preferably directly integrated to an outer surface of the plastic portion 110 or an interior of the plastic portion 110. For example, the antenna element 131 is configured to be directly bonded to the outer surface of the plastic portion 110, or the antenna element 132 is configured to be directly bonded to the interior of the plastic portion 110, to form an antenna housing 101. Preferably, the antenna housing 101 is also be regarded as a structure formed by combining the plastic portion 110 of the housing 100 with the antenna elements 130. Preferably, the antenna housing 101 is also be referred to as a housing-combined antenna or a housing-integrated antenna. In the present invention, the antenna elements 130 is directly integrated with the plastic portion 110 of the housing 100.

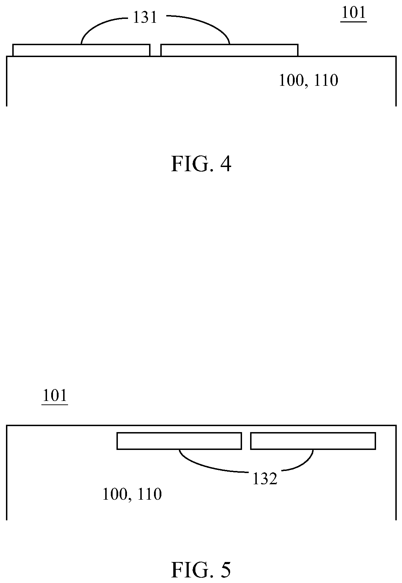

FIG. 4 is a schematic diagram illustrating a surface-integrated antenna housing included in the present invention; FIG. 5 is a schematic diagram illustrating an interior-integrated antenna housing included in the present invention. The integration of the antenna elements 130 with the plastic portion 110 includes being integrated or attached to an outer surface of the plastic portion 110 and integrated into an interior of the plastic portion 110. The present invention provides the antenna housing 101 that is formed by integrating or joining multiple antenna elements 130 with the plastic portion 110.

The means of integrating to the surface of the plastic portion 110 include but are not limited to: a printing, an etching, a coating, an adhering, a securing, a fastening, a surface mount assembly, or a combination thereof, etc.

For example, the printing preferably refers to directly printing conductive ink, such as but not limited to silver paste, onto the surface of the plastic portion 110 of the housing 100 to form an antenna pattern, thereby integrating the antenna element 131 to the outer surface of the plastic portion 110, and finally forming the antenna housing 101. The etching preferably refers to forming an antenna pattern on a metal thin film covered on the surface of the plastic portion 110 by using an etching technique, thereby integrating the antenna element 131 to the outer surface of the plastic portion 110, and finally forming the antenna housing 101.

The coating preferably refers to coating a conductive material on the surface of the plastic portion 110 by using means such as PVD, CVD, etc., to form an antenna pattern, thereby integrating the antenna element 131 to the outer surface of the plastic portion 110, and finally forming the antenna housing 101. The adhering preferably refers to adhering a pre-fabricated antenna element 131, such as an FPC based antenna, to the surface of the plastic portion 110 of the housing 100 using an adhesive material, and finally forming an antenna housing 101. The securing, fixing and fastening preferably refer to using mechanical means, such as but not limited to snaps or screws, to fix the antenna element 131 or a substrate on which the antenna element 131 is mounted to the plastic surface, and finally forming the antenna housing 101.

By implementing the above mentioned means of surface mount assembly, since the antenna element 131 attached on the plastic surface is partially or entirely exposed on the outer surface of the plastic housing, it is capable of providing an excellent communication quality. Although the antenna element 131 is partially or entirely exposed on the outer surface of the plastic housing, the exposed antenna element 131 is designed with a decorative texture that functions as a decorative pattern, and forms a decorative effect to provide the product with a unique appearance.

The means of integrating to the interior of the plastic portion 110 include but are not limited to: an insert molding, a double injection molding, an over-molding, a lamination, an embedding, an inlaying or a combination thereof.

For example, the insert molding preferably refers to placing a pre-fabricated antenna element 132, such as but not limited to an etched flexible printed circuit (FPC) antenna or a metal coil, into a mold during the plastic injection molding process, then injecting molten plastic to render the molten plastic to cover and encapsulate the antenna element 132 inside the plastic, solidifying the plastic to render the antenna element 132 being fixed, encapsulated and embedded within the interior of the plastic portion 110 of the housing 100, and finally forming the antenna housing 101. The double injection molding and over-molding preferably refer to first forming a part of the plastic portion 110, then performing a second injection molding to form the other parts of the plastic portion 110 to wrap the antenna element 132 therein to encapsulate the antenna element 132 within the interior of the plastic portion 110 of the housing 100, and finally forming the antenna housing 101.

The lamination preferably refers to sandwiching the antenna element 132 between different plastic layers of the plastic portion 110 during the manufacturing process when the plastic portion 110 is made of multiple plastic layers to finally encapsulate the antenna element 132 within the interior of the plastic portion 110 of the housing 100, thereby forming the antenna housing 101. The embedding and inlaying preferably refer to placing the antenna element 132 in a predetermined position of a pre-formed plastic housing, and then using methods, such as filling with adhesive or covering and adhering with another pre-formed plastic housing for fixation to finally encapsulate the antenna element 132 within the interior of the plastic portion 110 of the housing 100, thereby forming the antenna housing 101.

The above mentioned internal combinations have advantage that the plastic housing is capable of providing good and complete protection for the antenna element 132, preventing the antenna element 132 from physical damage or wear, and it is also less affected by external environmental influences. Furthermore, the antenna element 132 is totally hidden by the plastic portion 110 and becomes invisible in appearance, maintaining the flatness and aesthetic appearance for the housing surface.

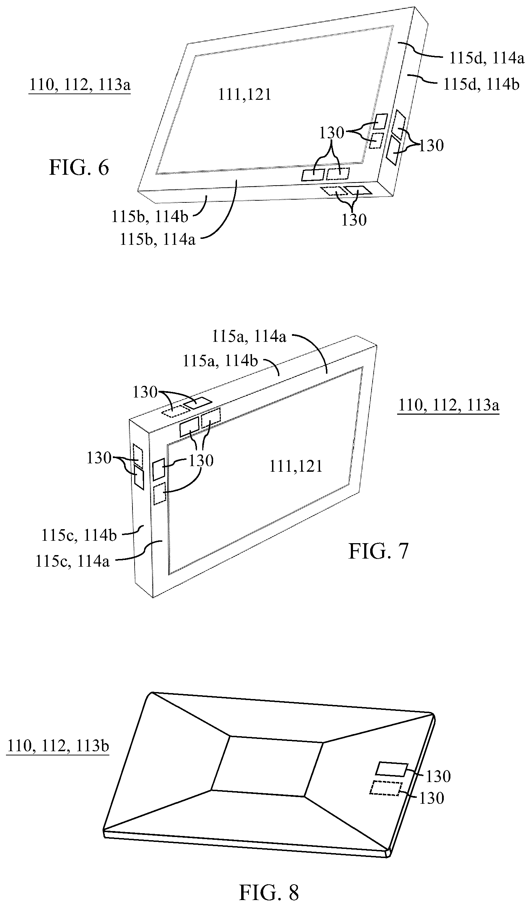

FIG. 6 is a schematic diagram illustrating a first perspective view for the first embodiment included in the present invention; FIG. 7 is a schematic diagram illustrating a second perspective view for the first embodiment included in the present invention; FIG. 8 is a schematic diagram illustrating a rear perspective view for the first embodiment included in the present invention. On devices such as SCO machines, POS machines, LCD screens, etc., the electronic device 10 usually has a rectangular display module 120, and the four edges thereof are usually surrounded by a plastic frame. In this embodiment, the plastic portion 110 is configured to form a plastic frame 112 which surrounds the four edges of the display module 120.

The plastic frame 112 preferably includes a front bezel 113a and a rear frame 113b, and is classified as a two-piece housing. The front bezel 113a refers to the frame on the side facing the user, or closer to the user or the display area. The rear frame 113b refers to the frame that is farther away from the user or functions as part of the back of the device.

The front bezel 113a preferably has a front surface 114a and a side surface 114b. The front surface 114a is adjacent to the display area 121 and is usually coplanar with the display area 121, or slightly higher or lower than the display area 121. The side surface 114b refers to the surface on one side that forms the thickness of the front bezel 113a.

The front bezel 113a preferably includes a top bezel 115a, a bottom bezel 115b, a left bezel 115c, and a right bezel 115d. The top bezel 115a, the bottom bezel 115b, the left bezel 115c, and the right bezel 115d jointly surround the edges of the viewing window 111 and define the scope of the viewing window 111.

Preferably, the plurality of antenna elements 130 are configured to be selectively integrated to any one of the positions as follows: the front surface 114a of the top bezel 115a, the bottom bezel 115b, the left bezel 115c, or the right bezel 115d; the side surface 114b of the top bezel 115a, the bottom bezel 115b, the left bezel 115c, or the right bezel 115d; or an interior of the top bezel 115a, the bottom bezel 115b, the left bezel 115c, or the right bezel 115d.

In the above configuration, the plurality of antenna elements 130 are configured in positions close to the display area 121, to have a layout of antenna at the position of the screen bezel. Therefore, users can intuitively bring NFC/RFID target devices or other sensing devices close to the bezel of the screen by following synchronous indications displayed on the screen while viewing the screen or operating the touch panel, rather than needing to search for other sensing points far from the screen, which greatly enhances the convenience and intuitiveness of use.

In particular, in scenarios using near-field electronic payment, once a consumer completes a checkout operation on the touch screen, the only remaining step they have to perfrom to complete the payment operation is to sense or tap the NFC/RFID target device on the bezel beside the screen, by simply following with an indicative pattern displayed on the screen at the same time, which is quite simple and intuitive.

Preferably, the plurality of antenna elements 130 can also be densely configured over the front surface 114a of the top bezel 115a, the bottom bezel 115b, the left bezel 115c, and the right bezel 115d, and the side surface 114b of the top bezel 115a, the bottom bezel 115b, the left bezel 115c, and the right bezel 115d, such that the consumer can sense the NFC/RFID target device at any position around the screen conveniently. That is, the consumer does not require to align the NFC/RFID to a specific sensing point on a target device, which achieves a surround-sensing effect and enhancing operational convenience.

In one embodiment, the plurality of antenna elements 130 are configured to be selectively integrated to any one of the positions as follows: a surface of the rear frame 113b or an interior of the rear frame 113b. The plurality of antenna elements 130 can also be configured to integrate to any position on the surface of the rear frame 113b, or any position within the interior of the rear frame 113b, so as to provide a back-side sensing function according to the usage scenario.

In general, the outer surface or interior of the bezel of a conventional screen or touch screen is not integrated with any electronic components. However, the present invention provides to configure near-field radio frequency sensing antennas on the outer surface or in the interior of the plastic frame of a screen or touch screen, by flexibly utilizing the plastic frame to configure antenna elements, which is advantageous for the mechanical design flexibility of the electronic device, and contributes to reduce interference between the antenna elements and other internal electronic components. Antenna elements integrated to the outer surface can provide a decorative effect for appearance by having an industrial decorative design.

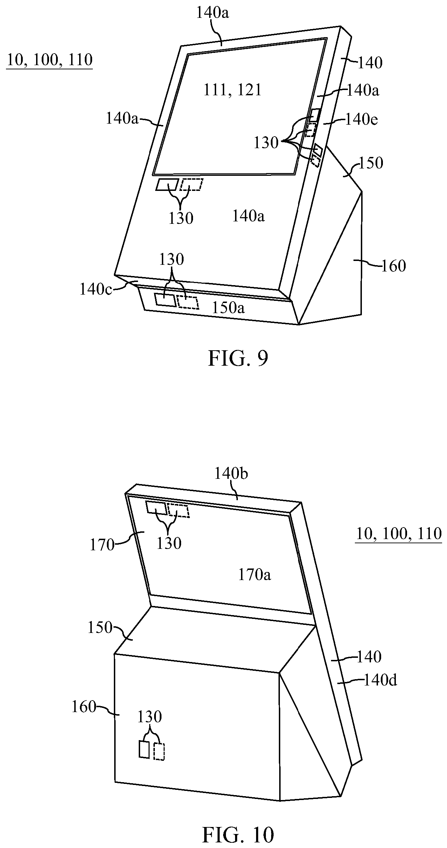

FIG. 9 is a schematic diagram illustrating a front top perspective view for the second embodiment included in the present invention; FIG. 10 is a schematic diagram illustrating a rear top perspective view for the second embodiment included in the present invention. The second embodiment is based on the first embodiment and includes all technical features described in the first embodiment. In this embodiment, the housing 100 of the electronic device 10 is designed to have a multi-piece structure. That is, the housing 100 preferably is assembled by and includes a first housing 140, a second housing 150, a third housing 160, and a fourth housing 170. Preferably, the housing 100 is configured to define the scope of the viewing window 111, and the display area 121 is exposed through the viewing window 111.

The first housing 140 preferably functions as, for example, a front housing or an upper housing. The second housing 150 preferably functions as, for example, a first rear housing. The third housing 160 preferably functions as, for example, a second rear housing or a lower housing, etc. The fourth housing 170 preferably functions as, for example, a back plate, etc. In this embodiment, the plastic portion 110 is configured to form the first housing 140, the second housing 150, the third housing 160, and the fourth housing 170.

Preferably, it is assumed that the display area 121 is used as a reference position, the plastic portion 110 includes a front side portion 140a that is positioned in front of the display area 121, a top side portion 140b that is positioned above the display area 121, a bottom side portion 150a and a bottom side portion 140c that are positioned below the display area 121, a left side portion 140d that is positioned to a left of the display area 121, a right side portion 140e that is positioned to a right of the display area 121, and a rear side portion 170a that is positioned behind the display area 121.

Preferably, the front side portion 140a, the top side portion 140b, the bottom side portion 150a, the left side portion 140d, the right side portion 140e, and the rear side portion 170a are configured in any one of the first housing 140, the second housing 150, the third housing 160, or the fourth housing 170. In this embodiment, the front side portion 140a, the top side portion 140b, the bottom side portion 140c, the left side portion 140d, and the right side portion 140e are configured on the first housing 140, the bottom side portion 150a is configured on the second housing 150, and the rear side portion 170a is configured on the fourth housing 170.

Preferably, the plurality of antenna elements 130 are configured to be selectively integrated to any one of the positions as follows: an outer surface of the front side portion 140a, the top side portion 140b, the bottom side portion 150a, the bottom side portion 140c, the left side portion 140d, the right side portion 140e, or the rear side portion 170a, or an interior of the front side portion 140a, the top side portion 140b, the bottom side portion 150a, the left side portion 140d, the right side portion 140e, or the rear side portion 170a.

Preferably, the plurality of antenna elements 130 are distributed on a surface or in an interior of any position of the plastic portion 110 of the housing 100 included in the electronic device 10, including but not limited to a front side, a lateral side, or a back side, etc., of the electronic device 10, thereby providing great degree of freedom of design for the antenna layout of the electronic device 10 and flexibility for configuring the sensing area.

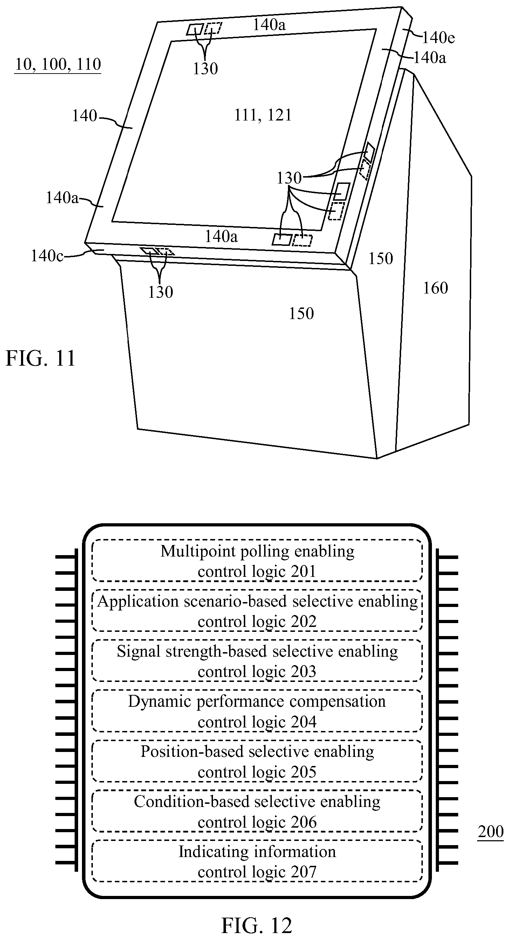

FIG. 11 is a schematic diagram illustrating a front view for the third embodiment included in the present invention. The third embodiment is based on the first and second embodiments and includes all technical features described in the first and second embodiments. In this embodiment, the housing 100 of the electronic device 10 is designed to have a three-piece housing. That is, the housing 100 preferably is assembled by and includes a first housing 140, a second housing 150, and a third housing 160. Preferably, the housing 100 is configured to define the scope of the viewing window 111, and the display area 121 is exposed through the viewing window 111.

Preferably, it is assumed that the display area 121 is used as a reference position, the plastic portion 110 includes a front side portion 140a that is positioned in front of the display area 121, a top side portion (not shown) that is positioned above the display area 121, a bottom side portion 140c that is positioned below the display area 121, a left side portion (not shown) that is positioned to a left of the display area 121, and a right side portion 140e that is positioned to a right of the display area 121. Preferably, the front side portion 140a, the top side portion, the bottom side portion 140c, the left side portion, and the right side portion 140e are configured on any one of the first housing 140, the second housing 150, or the third housing 160. In this embodiment, the front side portion 140a, the top side portion, the bottom side portion 140c, the left side portion, and the right side portion 140e are configured on the first housing 140.

Preferably, the plurality of antenna elements 130 are configured to be selectively integrated to any one of the positions as follows: an outer surface of the front side portion 140a, the top side portion, the bottom side portion 140c, the left side portion, or the right side portion 140e; or an interior of the front side portion 140a, the top side portion, the bottom side portion 140c, the left side portion, or the right side portion 140e.

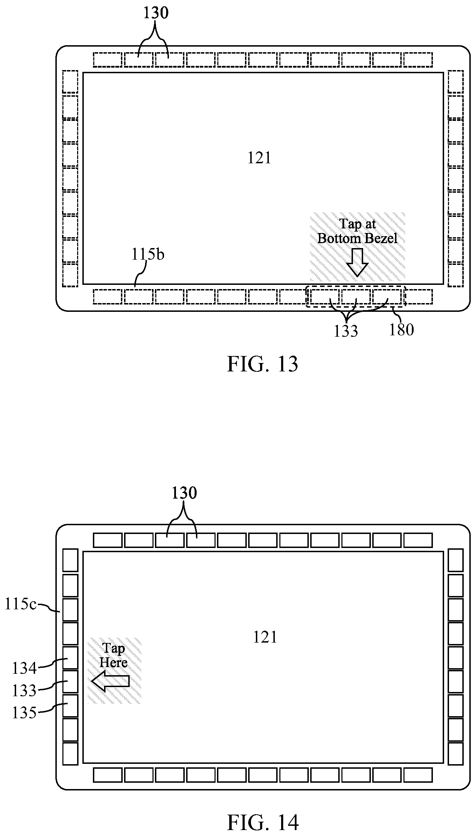

FIG. 12 is a block diagram illustrating multiple logic included in the control module and its firmware included in the present invention; FIG. 13 is a schematic diagram illustrating an operation of a position indication mode included in the indicating information control logic included in the present invention; FIG. 14 is a schematic diagram illustrating an operation of a random indication mode included in the indicating information control logic included in the present invention.

The control module 200 included in the present invention is configured to perform multiple intelligent control logics. These control logics are preferably implemented through firmware or software installed in the control module 200, and include a multipoint polling enabling control logic 201, an application scenario-based selective enabling control logic 202, a signal strength-based selective enabling control logic 203, a dynamic performance compensation control logic 204, a position-based selective enabling control logic 205, a condition-based selective enabling control logic 206, and an indicating information control logic 207.

The multipoint polling enabling control logic 201: In one embodiment, it is assumed that the plurality of antenna elements 130 preferably includes N antenna elements, and there are a total of n antenna elements T1, T2, T3, ..., Tn distributed on the housing 100 around the display area 121 that are to participate in polling enablement, and n ≤ N. The control module 200 is configured to cyclically and sequentially enable the n antenna elements T1, T2, T3, ..., Tn in a predetermined order, for example, in the order of T1→T2→T3→Tn→T1....
Step 1: The electronic device 10 is used as an initiator device for near-field wireless sensing communication.
Step 2: The control module 200 is configured to enable the antenna element T1 to emit a radio frequency carrier or an inquiry command, for example, at 13.56 MHz, as a first detection signal, monitor whether a target device enters the sensing scope of the antenna element T1 within a very short time window, such as a few milliseconds and respond if a target device is detected, and then disable the antenna element T1.
Step 3: The control module 200 is then configured to enable the antenna element T2 in sequence to emit a second detection signal, monitor for a time window, and then disable the antenna element T2.
Step 4: The control module 200 is then configured to enable the antenna element T3 in sequence to emit a third detection signal, monitor for a time window, and then disable the antenna element T3.
Step 5: The control module 200 is then configured to enable the antenna element Tn in sequence to emit a fourth detection signal, monitor for a time window, and then disable the antenna element Tn.
Step 6: Repeatedly and cyclically perform the above steps 2-5 until a certain antenna element receives a response signal from the target device within the time window.

By performing the multipoint polling enabling control logic 201, the control module 200 is able to effectively "scan" the physical space area collectively covered by all antenna elements T1-Tn. As long as the target device approaches the sensing scope of any one of the n antenna elements T1, T2, T3, ..., Tn, for example, approaches the antenna element T3, the antenna element T3 will detect the response signal sent from the target device, thereby sensing and finding out the target device.

The multipoint polling enabling control logic 201 provided by the present invention significantly expands the overall effective sensing scope of the electronic device 10, and enables the electronic device 10 to sense or scan the target device in a relatively larger scope, which addresses the limited sensing scope problem in conventional single-antenna system.

The application scenario-based selective enabling control logic 202: The control module 200 is configured to, according to different application scenarios, selectively enable/activate one or more of the plurality of antenna elements 130, or enable all of the antenna elements 130 to form a specific antenna array combination. That is, not all of the antenna elements 130 are required to be enabled or enter a working state. For example, in a payment scenario, the control module 200 enables multiple specific antenna elements 130 or a combination thereof that provide a payment function, such as an NFC antenna array, for a consumer to make a payment. In an information reading scenario, the control module 200 enables multiple specific antenna elements 130 or a combination thereof that provide a corresponding reading function, such as an RFID antenna array, to read a user's NFC/RFID target device. In a scenario where a consumer is standing to a left of the display area 121 and is preparing to make a payment, the control module 200 enable multiple specific antenna elements 130 or a combination thereof arranged on the left side of the display area 121, such as an NFC antenna array arranged on the left side of the display area 121 for the consumer to make the payment. In a scenario where a consumer is standing to a left of the display area 121 and is preparing to make a payment, but the consumer is right-handed person and used to make payments on the right side, the control module 200 enables an NFC antenna array arranged on the right side of the display area 121.

The signal strength-based selective enabling control logic 203: Preferably, the control module 200 is configured to selectively enable one of the antenna elements 130 with the strongest signal strength based on a received signal strength, for example, an RSSI value. For example, during the implementation of the multipoint polling enabling control logic 201, if it is found that antenna elements T1-T3 receive response signals, but the signal strength received by antenna element T1 is the strongest, the control module 200 selects and enables the antenna element T1 for subsequent communication.

Preferably, the control module 200 is configured to adaptively switch to enable the antenna element with the strongest signal strength based on a received signal strength, for example, an RSSI value. For example, if the control module 200 is currently using antenna element T1 for communication, but it is found that antenna element T2 receives a stronger signal strength during the implementation of the multipoint polling enabling control logic 201, the control module 200 is configured to instantly and adaptively switch to enable antenna element T2.

Preferably, the control module 200 is configured to determine whether a received signal strength of a certain antenna element is below a predetermined threshold value. If it is the case, the control module 200 is then configured to selectively enable more antenna elements or switch to enable other antenna elements with stronger signal strength, to compensate for the signal or improve success rate of reading.

Therefore, in practical application scenarios, such as but not limited to NFC/RFID sensing scenarios, even though a user's NFC/RFID target device slightly deviates from a preset sensing area, the control module 200 is still capable of tracking the current position of the NFC/RFID target device by performing the signal strength-based selective enabling control logic 203, and then enabling the most suitable antenna element.

The dynamic performance compensation control logic 204: In order to improve the success rate and sensitivity of sensing, the control module 200 is configured to determine whether a received signal strength of a certain antenna element is below a predetermined threshold value. If it is the case, then more or adjacent antenna elements are instantly and dynamically selectively enabled, or other antenna elements with stronger signal strength are enabled immediately, to compensate for the signal or improve reading success rate.

The position-based selective enabling control logic 205: The control module 200 is configured to provide for a user to predetermine, preset or customize a specific position, a scope or an area as a specified sensing area. For example, a payment sensing area is preset by the firmware to be positioned at a lower right, a software provides a graphical user interface for a user to customize an identity sensing area at an upper right, etc. Based on the predetermined scope or the customized area as the specified sensing area, multiple antenna elements out of from the plurality of antenna elements 130 that cover the specified sensing area are correspondingly and selectively enabled.

The condition-based selective enabling control logic 206: The control module 200 is configured to selectively enable specific antenna elements based on a predetermined condition. For example, the firmware or the software is pre-set that only the antenna element with the lowest power consumption is enabled for performing a basic detection when in a standby state or an idle state.

The indicating information control logic 207: In order to improve user experience, the control module 200 is configured to display an indicating information in the display area 121, which the indicating information is such as but not limited to: a pattern, a motif, an icon, a visual cue, text, an arrow, a bright spot, an illuminated block, a graphical illustration, or a text prompt. The indicating information includes information related to a currently operating sensing area. The indicating information control logic 207 is configured to preferably include a position indication mode and a random indication mode.

For example, when multiple antenna elements 130 are arranged to surround the four bezels of the display area 121, in the position indication mode, in particular when the control module 200 has enabled multiple different sensing areas for different near-field wireless sensing communication technologies, it is assumed that a payment sensing area 180 covering three antenna elements 133 integrated within the bottom bezel 115b below the screen is the currently operating sensing area out of the multiple different sensing areas. When an operation flow enters a payment procedure, as shown in FIG. 13, the control module 200 is configured to display a downward arrow at a position within the display area 121 close to the payment sensing area 180 configured at the bottom bezel, with a text prompt "Tap at Bottom Bezel", to inform the consumer that the payment sensing area 180 is at the bottom bezel of the screen.

For example, when multiple antenna elements 130 are arranged to surround the four bezels of the display area 121, in the random indication mode, when the control module 200 detects, by performing the multipoint polling enabling control logic 201, that, for example, an RFID tag is approaching, for example, an antenna element 133 configured on an outer surface of the left bezel 115c, and antenna elements 133, 134, and 135 are enabled for communication. As shown in FIG. 14, the control module 200 is configured to display a leftward arrow near a position on a left side within the display area 121 close to the enabled antenna elements 133, 134, and 135, with a text prompt "Tap Here", to clearly guide the consumer to bring the NFC/RFID target device close to the correct sensing position.

The present invention provides to directly integrate a plurality of antenna elements used for near-field wireless sensing communication technologies based on the principle of magnetic sensing or inductive magnetic coupling, such as but not limited to NFC, RFID, MST, etc., to an outer surface or an interior of a plastic housing component of any electronic device, to form an antenna housing. The antenna elements are preferably arranged close to the display area, i.e., the screen, and are controlled and selectively enabled by an intelligent control module, to enhance the convenience and ease of use, the sensing reliability, and the degree of integration for component design.

In summary, the present invention provides integrating a plurality of independently enableable antenna elements into the plastic housing of an electronic device with an intelligent control module, to realize various operation modes for antenna elements, such as selective enablement, multipoint polling, dynamic adjustment, and to provide visual guidance for a user. Mutiplte intelligent control logics are designed and provided to achieve flexible, reliable, and user-friendly sensing functions, and also to significantly enhance the performance, reliability, and user experience for NFC/RFID technology in electronic devices. The antenna housing provided by the present invention and the electronic device including the same are applicable to any electronic device that requires or requires to integrate the near-field wireless sensing communication or the near-field wireless communication. The present invention further includes the following advantages:
(1) Expanded sensing scope and flexibility: By arranging a plurality of antenna elements at different positions of the plastic housing, preferably such as around the screen bezel, on the sides, on the back, etc., the overall sensing scope is effectively expanded, and the user does not need to accurately align the target device with a single fixed point, thereby enhancing operational convenience.
(2) Adaptation to diverse application scenarios: The control module is capable of selectively activating the most suitable antenna, for example, left side, right side, top side, or a combined area, according to different application programs, user preferences, or specific needs, providing a highly customized and adaptive user experience.
(3) Enhanced user interaction experience: Combined with indicative patterns on the display module, it intuitively guides the user to bring an NFC/RFID card or tag close to an effective sensing area, reducing the operational threshold and improving the first-time sensing success rate.
(4) Enhanced reading performance and reliability: Through multipoint polling sensing, signal strength detection, and dynamic adjustment mechanisms, the tag sensing success rate and communication reliability can be improved in complex environments or when the tag position is uncertain.

There are further embodiments provided as follows.

Embodiment 1: An electronic device includes: an antenna housing configured to include a plastic portion and to define a viewing window; a display module including a display area, wherein a portion of the display module is configured within the antenna housing and the display area is exposed through the viewing window; and a plurality of antenna elements, each of which is independently enableable and configured to be integrated to a surface or an interior of the plastic portion.

Embodiment 2: The electronic device according to Embodiment 1 further includes one of: a control module electrically connected to the plurality of antenna elements and configured to: selectively enable one of the plurality of antenna elements; perform a multipoint polling enabling control logic to sequentially and cyclically enable the plurality of antenna elements; perform an application scenario-based selective enabling control logic to selectively enable one of the plurality of antenna elements based on an application scenario; perform a signal strength-based selective enabling control logic to selectively enable one of the plurality of antenna elements based on a received signal strength; perform a dynamic performance compensation control logic to dynamically and selectively enable more of the plurality of antenna elements when the received signal strength is below a threshold value; perform a position-based selective enabling control logic to selectively enable one of the plurality of antenna elements based on a predetermined position or a customized position; perform a condition-based selective enabling control logic to selectively enable one of the plurality of antenna elements based on a predetermined condition; and perform an indicating information control logic to display an indicating information in the display area, wherein the indicating information is configured to indicate corresponding information related to an enabled antenna element out of the plurality of antenna elements.

Embodiment 3: The electronic device according to Embodiment 1 further includes one of: the antenna housing further including a first housing and a second housing; the plastic portion configured to form one of the first housing and the second housing; the plastic portion including a front side portion positioned in front of the display area, a top side portion positioned above the display area, a bottom side portion positioned below the display area, a left side portion positioned to a left of the display area, a right side portion positioned to a right of the display area, and a rear side portion positioned behind the display area, wherein the front side portion, the top side portion, the bottom side portion, the left side portion, the right side portion, and the rear side portion are configured to distribute in one of the first housing and the second housing; the plurality of antenna elements configured to be integrated to one of a surface of the front side portion, a surface of the top side portion, a surface of the bottom side portion, a surface of the left side portion, a surface of the right side portion, a surface of the rear side portion, an interior of the front side portion, an interior of the top side portion, an interior of the bottom side portion, an interior of the left side portion, an interior of the right side portion, and an interior of the rear side portion; and the plurality of antenna elements configured to be integrated to one of a surface of the first housing, a surface of the second housing, an interior of the first housing, and an interior of the second housing.

Embodiment 4: The electronic device according to Embodiment 1 further includes one of: the plastic portion is configured to form a plastic frame; the plastic frame including a front bezel and a rear frame; the front bezel having a front surface and a side surface adjacent to the display area, and including a top bezel, a bottom bezel, a left bezel, and a right bezel, wherein the viewing window is defined by the top bezel, the bottom bezel, the left bezel, and the right bezel; the top bezel, the bottom bezel, the left bezel, and the right bezel configured to surround edges of the display module; the plurality of antenna elements configured to be integrated to one of the front surface of the top bezel, the front surface of the bottom bezel, the front surface of the left bezel, the front surface of the right bezel, the side surface of the top bezel, the side surface of the bottom bezel, the side surface of the left bezel, the side surface of the right bezel, an interior of the top bezel, an interior of the bottom bezel, an interior of the left bezel, and an interior of the right bezel; and the plurality of antenna elements configured to be integrated to one of a surface of the rear frame and an interior of the rear frame.

Embodiment 5: The electronic device according to Embodiment 1, a portion of the plurality of antenna elements is integrally bonded to the interior of the plastic portion by an insert molding, an embedding, a lamination, a double injection molding, or a combination thereof.

Embodiment 6: The electronic device according to Embodiment 1, a portion of the plurality of antenna elements is integrally bonded to the surface of the plastic portion by a surface mount assembly, a printing, an etching, a coating, an adhering, a securing, a fixing, a fastening or a combination thereof.

Embodiment 7: The electronic device according to Embodiment 1, each of the plurality of antenna elements is an NFC antenna, an RFID antenna, an HF RFID antenna, an LF RFID antenna, or an MST antenna.

Embodiment 8: The electronic device according to Embodiment 1, the display module includes the display area and a touch panel which is configured above the display area.

Embodiment 9: The electronic device according to Embodiment 1, the electronic device is a kiosk, a POS (point-of-sale) terminal, a POS (point-of-service) terminal, a SST (self-service terminal), a SCO (self-checkout) terminal, an electronic access control terminal, an interactive advertising terminal, a cashier terminal, a LCD (liquid crystal display), or an OLED (organic light-emitting diode) display.

Embodiment 10: An antenna housing is configured in an electronic device and includes: the electronic device, including: a housing configured to include a plastic portion and to define a viewing window; a display module including a display area, wherein a portion of the display module is configured within the antenna housing and the display area is exposed through the viewing window; and a plurality of antenna elements, each of which is independently enableable and configured to be integrated to a surface or an interior of the plastic portion.

While the disclosure has been described in terms of what are presently considered to be the most practical and preferred embodiments, it is to be understood that the disclosure need not be limited to the disclosed embodiments. On the contrary, it is intended to cover various modifications and similar arrangements included within the scope of the appended claims, which are to be accorded with the broadest interpretation so as to encompass all such modifications and similar structures. Therefore, the above description and illustration should not be taken as limiting the scope of the present disclosure which is defined by the appended claims.

## Claims

1. An electronic device, comprising:
an antenna housing configured to comprise a plastic portion and to define a viewing window;
a display module comprising a display area, wherein a portion of the display module is configured within the antenna housing and the display area is exposed through the viewing window; and
a plurality of antenna elements, each of which is independently enableable and configured to be integrated to a surface or an interior of the plastic portion.

2. The electronic device according to claim 1, further comprising one of:
a control module electrically connected to the plurality of antenna elements and configured to:
selectively enable one of the plurality of antenna elements;
perform a multipoint polling enabling control logic to sequentially and cyclically enable the plurality of antenna elements;
perform an application scenario-based selective enabling control logic to selectively enable one of the plurality of antenna elements based on an application scenario;
perform a signal strength-based selective enabling control logic to selectively enable one of the plurality of antenna elements based on a received signal strength;
perform a dynamic performance compensation control logic to dynamically and selectively enable more of the plurality of antenna elements when the received signal strength is below a threshold value;
perform a position-based selective enabling control logic to selectively enable one of the plurality of antenna elements based on a predetermined position or a customized position;
perform a condition-based selective enabling control logic to selectively enable one of the plurality of antenna elements based on a predetermined condition; and
perform an indicating information control logic to display an indicating information in the display area, wherein the indicating information is configured to indicate corresponding information related to an enabled antenna element out of the plurality of antenna elements.

3. The electronic device according to claim 1, further comprising one of:
the antenna housing further comprising a first housing and a second housing;
the plastic portion configured to form one of the first housing and the second housing;
the plastic portion comprising a front side portion positioned in front of the display area, a top side portion positioned above the display area, a bottom side portion positioned below the display area, a left side portion positioned to a left of the display area, a right side portion positioned to a right of the display area, and a rear side portion positioned behind the display area, wherein the front side portion, the top side portion, the bottom side portion, the left side portion, the right side portion, and the rear side portion are configured to distribute in one of the first housing and the second housing;
the plurality of antenna elements configured to be integrated to one of a surface of the front side portion, a surface of the top side portion, a surface of the bottom side portion, a surface of the left side portion, a surface of the right side portion, a surface of the rear side portion, an interior of the front side portion, an interior of the top side portion, an interior of the bottom side portion, an interior of the left side portion, an interior of the right side portion, and an interior of the rear side portion; and
the plurality of antenna elements configured to be integrated to one of a surface of the first housing, a surface of the second housing, an interior of the first housing, and an interior of the second housing.

4. The electronic device according to claim 1, further comprising one of:
the plastic portion is configured to form a plastic frame;
the plastic frame comprising a front bezel and a rear frame;
the front bezel having a front surface and a side surface adjacent to the display area, and comprising a top bezel, a bottom bezel, a left bezel, and a right bezel, wherein the viewing window is defined by the top bezel, the bottom bezel, the left bezel, and the right bezel;
the top bezel, the bottom bezel, the left bezel, and the right bezel configured to surround edges of the display module;
the plurality of antenna elements configured to be integrated to one of the front surface of the top bezel, the front surface of the bottom bezel, the front surface of the left bezel, the front surface of the right bezel, the side surface of the top bezel, the side surface of the bottom bezel, the side surface of the left bezel, the side surface of the right bezel, an interior of the top bezel, an interior of the bottom bezel, an interior of the left bezel, and an interior of the right bezel; and
the plurality of antenna elements configured to be integrated to one of a surface of the rear frame and an interior of the rear frame.

5. The electronic device according to claim 1, wherein a portion of the plurality of antenna elements is integrally bonded to the interior of the plastic portion by an insert molding, an embedding, a lamination, a double injection molding, or a combination thereof.

6. The electronic device according to claim 1, wherein a portion of the plurality of antenna elements is integrally bonded to the surface of the plastic portion by a surface mount assembly, a printing, an etching, a coating, an adhering, a securing, a fixing, a fastening or a combination thereof.

7. The electronic device according to claim 1, wherein each of the plurality of antenna elements is an NFC antenna, an RFID antenna, an HF RFID antenna, an LF RFID antenna, or an MST antenna.

8. The electronic device according to claim 1, wherein the display module comprises the display area and a touch panel which is configured above the display area.

9. The electronic device according to claim 1, wherein the electronic device is a kiosk, a POS (point-of-sale) terminal, a POS (point-of-service) terminal, a SST (self-service terminal), a SCO (self-checkout) terminal, an electronic access control terminal, an interactive advertising terminal, a cashier terminal, a LCD (liquid crystal display), or an OLED (organic light-emitting diode) display.

10. An antenna housing configured in an electronic device, comprising:
the electronic device, comprising:
a housing configured to comprise a plastic portion and to define a viewing window;
a display module comprising a display area, wherein a portion of the display module is configured within the antenna housing and the display area is exposed through the viewing window; and
a plurality of antenna elements, each of which is independently enableable and configured to be integrated to a surface or an interior of the plastic portion.
